# EUROPEAN PATENT APPLICATION

(11) **EP 3 348 442 A1**
(43) Date of publication of application: **18.07.2018**
(21) Application number: 18151435.7
(22) Date of filing: 12.01.2018
(51) Int. Cl.: B60S 13/02, A47F 5/025

(54) **A TURNING DEVICE FOR HORIZONTAL ROTATION OF A VEHICLE**

(30) Priority: 12.01.2017 DK 201700030
(71) Applicant: Kaergaard Jensen Invest ApS, 6100 Haderslev (DK)
(72) Inventor: JENSEN, Thomas Kjærgaard, Haderslev 6100 (DK)
(74) Representative: Patentgruppen A/S

(57) **Abstract**

The invention involves a simple turning device with self-determined degree interval, embodied in aluminium, wherein it comprises a pair of platforms (20, 30), each with a supporting element, which platforms (20, 30) are connected using a connecting device (40) which is turnable around a centre device attached to the floor. Furthermore, a pair of extension platforms (50, 60) can be added, which are similarly designed with a supporting element. The device is used for horizontal rotation of vehicles and trailers and can easily be operated manually or automatically by a single person. The device is mobile and may easily be assembled/disassembled as required, and therefore does not occupy floor space. Furthermore, it may be assembled indoors as well as outdoors.

This invention now makes it easy and financially possible for the automotive industry to meet increasing demands of customers, vehicle producers and automobile importers for a digital 360° presentation of a vehicle on websites and other digital media.

## Description

### Field of the invention

The invention relates to a turning device for horizontal rotation of vehicles and trailers. The invention thus relates to a turning device as specified in the preamble of claim 1.

### State of the art

360-degree turning devices of this kind are known for use in degree-separated photography of vehicles/trailers. These known devices are generally relatively large and heavy stationary installations, which for most car and trailer dealers would be a very expensive solution, and for some even a financially impossible solution. At the same time, the known solutions are extremely time-consuming to assemble and disassemble again.

An example of prior art is indicated in FR 2,699,876 A1, which relates to a turning device for horizontal rotation of vehicles, wherein the turning device comprises two parallel platforms onto which a vehicle can be driven. The two platforms are adjustable in length and are connected to each other at each end via cross members, which are also adjustable, so that the track width of the platforms can be adapted. Furthermore, the cross members are connected longitudinally, also adjustably, via a rod part. Said rod part has at its centre a bearing, which cooperates with a pin fixed in the floor. The turning device has four wheels mounted at each corner of the turning device and radially outside the support surfaces of the platforms, whereby the turning device can be turned around the fixed pin. Platforms, cross members and the rod part are bolted to each other, so that length and width adjustments require disassembly and subsequent reassembly of said bolt joints. Handling of the separated individual components is further made difficult because the wheels are placed laterally in relation to the platforms, so that a platform with wheels, once disconnected, will only be supported by the wheels on one side of the platform.

It is an object of the invention to provide a turning device which is easy to assemble and/or disassemble, so that a single person can do this alone. Furthermore, it is an object to provide such a turning device which is easily adjustable in relation to wheel base and track width, which is mobile and can thus easily be packed away so that it does not take up unnecessary space (as opposed to the known stationary versions).

This and other objects are achieved by the invention, as will be explained in further detail in the following.

### The invention

The invention relates, as set forth in claim 1, to a turning device for horizontal 360-degree rotation of vehicles and trailers, wherein the turning device comprises
- a right-side platform and a left-side platform, each with a supporting element,
- a connecting device,
- a centre device for attachment to a floor, and
- a right-side drive ramp and a left-side drive ramp,
wherein the connecting device is arranged to connect the right-side platform and the left-side platform, wherein the right-side platform and the left-side platform each has a plurality of holes for adjustment of the turning device, and wherein the connecting device is rotatable around said centre device.

The invention is characterised in that
- the connecting device has a centre axle that can be placed in said centre device, that
- the connecting device has guide pins for establishing connection to the right-side platform and the left-side platform via respective holes of said plurality of holes, that
- the turning device comprises a device for indicating the turning position of the turning device, that
- the turning device comprises a right-side extension platform and a left-side extension platform, designed to extend the right-side platform and the left-side platform, respectively, wherein each of the right-side extension platform and the left-side extension platform has extension guide pins at an end for cooperation with the right-side platform and the left-side platform, respectively, and that
- each of the right-side extension platform and the left-side extension platform has a supporting element.

By the invention the advantages are achieved that the turning device is easy to assemble and/or disassemble, so that a single person can do this alone. It is easily adjustable in relation to wheel base and track width, and furthermore, it is mobile and can thus easily be packed away so that it does not take up unnecessary space, as opposed to the known stationary versions.

By the invention it is achieved that a vehicle or trailer can be photographed while it rotates on the turning device according to the invention and in a self-determined degree interval (e.g. 15 degrees = 24 photos). These photos are subsequently used in a photo editing programme, which is able to create a 360° digital display for potential customers, who thus have the opportunity of turning and zooming in and out themselves on the vehicle/trailer, thereby achieving a more LIVE display. The turning device and/or use according to the invention will thus also be referred to as 'EasyCarDisplay' .

Further it is achieved by this invention that it can be easily set to degrees, so that the user can easily set the turning device to turn exactly the desired number of degrees (as opposed to other devices where degree settings only exist on stationary power-driven platforms), and that it can be set easily and without the use of tools and measuring equipment, so that it can be used for vehicles and trailers up to e.g. 5 tonnes of empty weight with different wheel bases and track widths (as opposed to other devices which can only be adjusted on either wheel base or track width).

It should be noted that the term 'platform' in relation to the invention is generally understood as driving elements for vehicles, such as ramps, platforms etc., designed as normally elongate elements, onto which a vehicle can drive or be placed, such platforms being arranged in pairs, parallel to each other, corresponding to the vehicle track width. It should also be understood that such platforms can be placed horizontally or sloping, in the latter case e.g. when they are used as drive ramps. In the following, the designation platform will be used in the above-mentioned sense.

According to an expedient embodiment, such as set forth in claim 2, said supporting element for the right-side platform, the left-side platform, the right-side extension platform and the left-side extension platform may comprise units selected from the group comprising:
castor wheels,
steel rollers,
ball bearings,
roller bearings, and
swivel wheels with motor.

Hereby, it is achieved, e.g. by using castor wheels that can be moved in any direction, that it becomes possible to adjust the wheel base and track width smoothly (as opposed to devices with attached rollers and fixed wheels), the respective platforms being easily movably on the floor in any direction during the adjustment.

According to an expedient embodiment, such as set forth in claim 3, the centre device for attachment to a floor may comprise a flange with ball bearing, wherein the centre axle on the connecting device can be placed in the ball bearing. Hereby, it is achieved that the turning device can be easily placed and assembled around the centre device, and that the centre device, when the turning device is removed, will not be in the way of any other exploitation of the floor. However, it is clear that the centre device may instead be constituted by a pin or the like attached to the floor. Likewise, another type of bearing than a ball bearing may be used.

According to another expedient embodiment, such as set forth in claim 4, said supporting element for the right-side platform, the left-side platform, the right-side extension platform and the left-side extension platform may comprise a number of units disposed under the respective platforms, distributed along the longitudinal and width direction of the respective platforms.

According to a further expedient embodiment, such as set forth in claim 5, said supporting element for each platform may comprise a plurality of units, e.g. 10 or more wheels, castor wheels or similar wheels. This ensures that the individual platforms are supported over a larger surface, and, when they are not assembled, can be moved across the floor as independent units. Furthermore, an advantageous distribution of the weight of a vehicle is achieved when the platforms are assembled and a vehicle is driven onto and placed on the turning device. The number of castor wheels per platform may be e.g. 10-30, 10-20 or even more.

According to yet another expedient embodiment, such as set forth in claim 6, the device for indicating the turning position of the turning device may comprise a degree marking device in the form of a fixedly mounted indicator or arrow on the right-side platform and/or the left-side platform, whereby the turning position can be read, e.g. via degree markings on a floor.

According to a further expedient embodiment, such as set forth in claim 7, the device for indicating the turning position of the turning device may comprise laser light pointing downwards on degree markings on a floor.

According to yet another expedient embodiment, such as set forth in claim 8, the device for indicating the turning position of the turning device may comprise a distance and/or degree measuring device located on the turning device to provide a measure of distance and/or angle rotation during rotation of the turning device. This may e.g. be utilised for a more or less automated use, so that the turning device automatically stops when it has turned to a set angle.

According to a further expedient embodiment, such as set forth in claim 9, the turning device may be embodied using aluminium for the design of platforms, drive ramps, the connecting device and/or other elements, which makes the turning device and its sub-elements light and easy to handle.

According to yet another expedient embodiment, such as set forth in claim 10, the turning device may be adapted for machine operation and handling, driven by an electric motor, e.g. by means of a remote control and/or a pedal function, and wherein said electric motor is in communication with a turning wheel, e.g. via a connection with gears, drive belt or drive shaft for turning the turning device.

Thereby, the turning device, in addition to being manually operated, may be arranged to be driven by an electric motor. Said electric motor may be linked directly to a turning wheel that drives the turning device around, or the electric motor may be connected via gears, drive belt or drive shaft as force-transmitting element(s) to e.g. a wheel that may drive the turning device round. For example, this may be a drive unit which includes the electric motor, and which may be mounted on one of the platforms. Since such mechanical operation according to the embodiment may take place via remote control, i.e. comprising a control of the electric motor, there is a possibility of a greater or lesser degree of automation of the use of the turning device.

According to yet another expedient embodiment, such as set forth in claim 11, the right-side extension platform and the left-side extension platform may each have a locking device, such as a snap locking device, for locking to the right-side platform and the left-side platform, respectively.

### List of figures

The invention will be explained in more detail in the following with reference to the drawings, where
- Fig. 1: shows a flange with ball bearing for bolting to the floor,
- Fig. 2: shows a right-side and a left-side platform, viewed at an angle from above,
- Fig. 3: shows the corresponding undersides of the right-side and the left-side platforms,
- Fig. 4: shows an example of a degree marking device on a right-side platform,
- Fig. 5: shows, corresponding to Fig. 4, an example of a degree marking device on a left-side platform,
- Fig. 6: shows a connecting device according to an embodiment of the invention,
- Fig. 7: is a detail part of Fig. 6, in which the centre axle is shown,
- Fig. 8: is a detail part of Fig. 6 in which a guide pin is shown,
- Fig. 9: shows a right-side and a left-side extension platform, viewed at an angle from above,
- Fig. 10: is a detail part of Fig. 9, in which guide pins and locking arrangement are shown,
- Fig. 11: shows, corresponding to Fig. 9, the undersides of the right-side and the left-side extension platforms,
- Fig. 12: shows an example of a right-side and left-side drive ramp, viewed partially from the side and at an angle from above,
- Fig. 13: shows an example of a protractor for use when setting and/or displaying a degree interval on a floor,
- Figs. 14-22: illustrate the assembly of an exemplary turning device according to an embodiment of the invention,
- Fig. 23: illustrates a turning device according to a further embodiment of the invention, viewed from above,
- Fig. 24: shows, viewed from above, an embodiment of the connecting device for use at the turning device,
- Fig. 25: shows a separate cross member for use in connection with the embodiment shown in Fig. 23,
- Fig. 26: shows a turning device substantially corresponding to the embodiment shown in Fig. 23, and
- Fig. 27: shows an embodiment of a drive unit.

### Exemplary embodiments

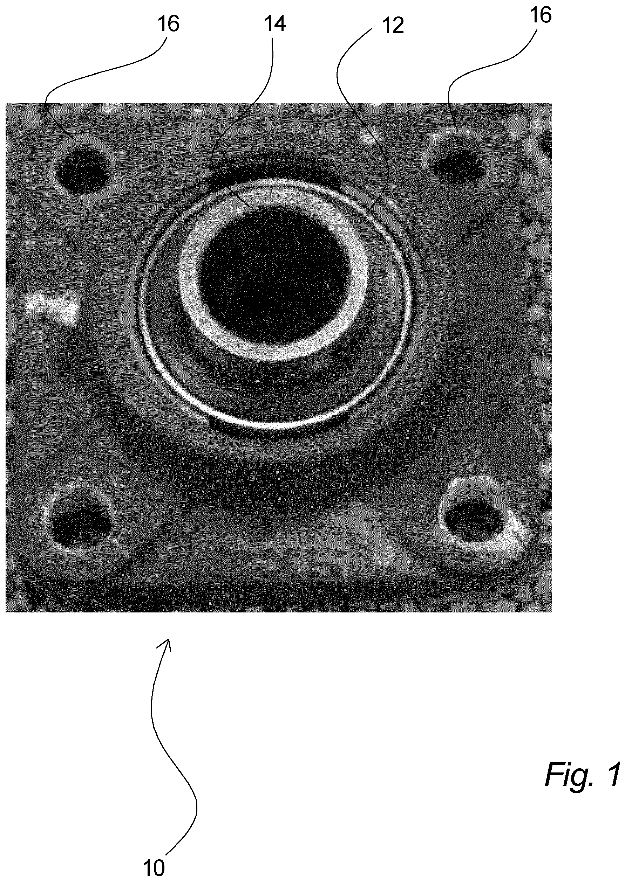

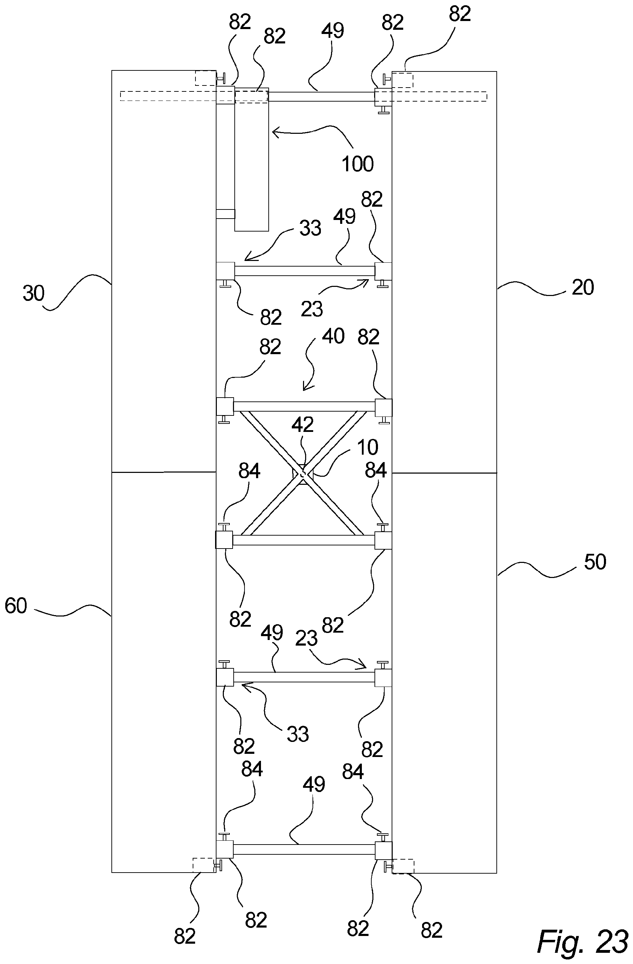

Various embodiments of a turning device according to the invention as well as various embodiments of sub-elements thereof will be described in the following with reference to Figs. 1-13 and with reference to Figs. 23-27.

Fig. 1 shows an example of a flange 10 with a ball bearing 12, wherein the flange 10 consists of a square iron fitting which contains a centred ball bearing 12 with a centre hole 14. The flange 10 must be bolted into the floor and for this purpose is provided with mounting holes 16. The flange 10 may optionally be countersunk in the floor.

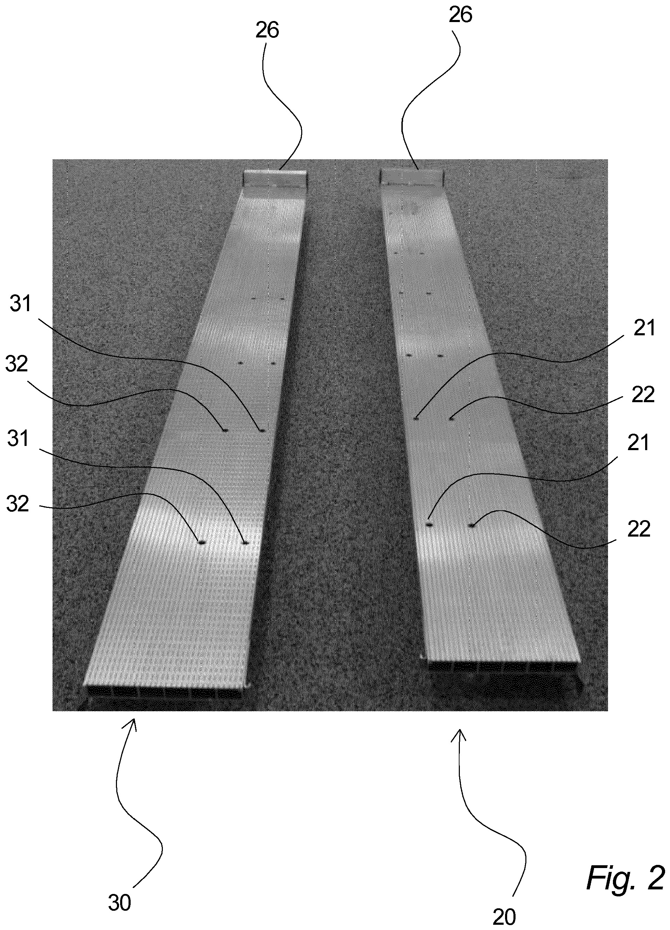

Fig. 2 shows an example of a right-side platform 20 and a corresponding left-side platform 30 shown at an angle from above and from one end. The right-side platform 20 is provided with degree marking device 24 (not shown in Fig. 2) and holes 21, 22 for longitudinal and width adjustment of the turning device. The right-side platform 20 further has a supporting element 28 (not shown in Fig. 2), and in the example shown, the right-side platform 20 further consists of an aluminium platform with a length of 3 metres and a width of 30 cm. Similarly, Fig. 2 shows an example of a left-side platform 30, which is also provided with a degree marking device 34 (not shown in Fig. 2) and holes 31, 32 for longitudinal and width adjustment of the turning device. The left-side platform 30 also has a supporting element 28 (not shown in Fig. 2), and in the example shown, the left-side platform 30 further consists of an aluminium platform with a length of 3 metres and a width of 30 cm. Both platforms 20, 30 can, as shown in Fig. 2, have an end part 26 on the platforms.

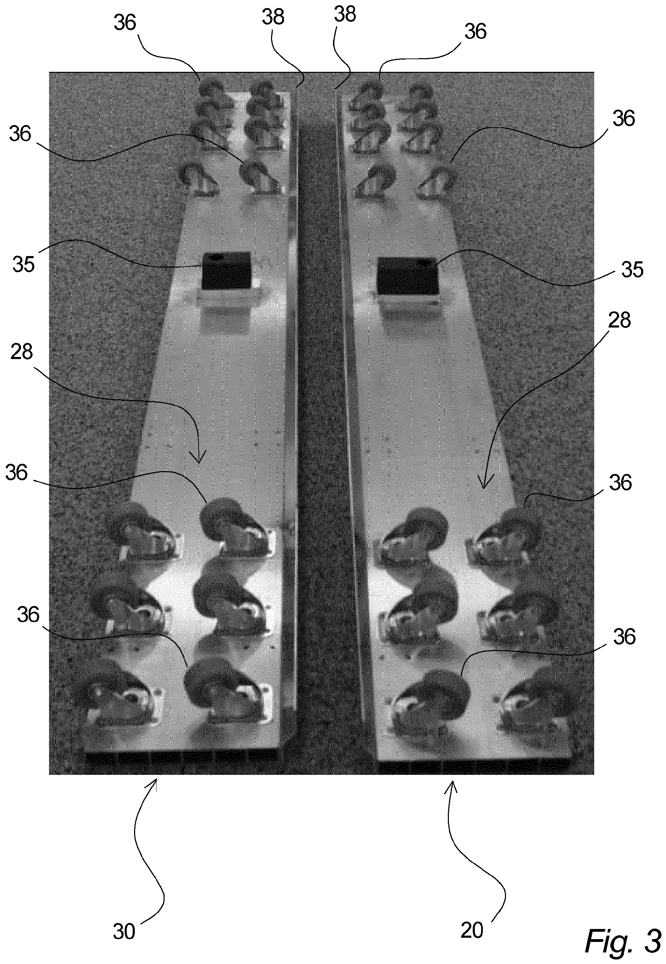

Fig. 3 shows the undersides of the right-side and the left-side platforms 20, 30, wherein the two platforms are placed side by side with the outer sides facing each other. On the outer side of the right-side platform 20, a shielding 38 is mounted, which covers the supporting element 28. As shown in this example, the supporting element 28 comprises 14 castor wheels 36, which are configured to be turnable and thus movable in any direction. These wheels may e.g. each carry 500 kg. These wheels are riveted to the underside of the platform in this example and disposed in a distributed manner, such as shown in Fig. 3, along the width and length of the platform, whereby the platform is supported by the wheels evenly distributed along the longitudinal and width directions. A rubber block 35 is also mounted on the underside around the middle to stabilise the platform during driving over it. Furthermore, as also explained in connection with Fig. 2, e.g. eight holes 21, 22 have been drilled in the platform, so that the connecting device 40 (not shown in Fig. 3) can easily be placed with its attached guide pins 41, as will be explained later.

Similarly, Fig. 3 shows that on the outer side of the left-side platform 30, a shielding 38 is mounted, which covers the supporting element 28. The supporting element 28 consists for instance also here of 14 castor wheels 36, configured to be turnable and thus movable in any direction. These wheels may e.g. each carry 500 kg. These wheels are, as mentioned in connection with this example, riveted to the underside of the platform and disposed in a distributed manner, such as shown in Fig. 3, whereby the platform is supported by the wheels evenly distributed along the longitudinal and width directions. A rubber block 35 is also mounted on the underside around the middle to stabilise the platform during driving over it. Furthermore, also by the left-side platform, e.g. eight holes have been drilled in the platform, so that the connecting device 40 (not shown in Fig. 3) can easily be placed with its attached guide pins 41.

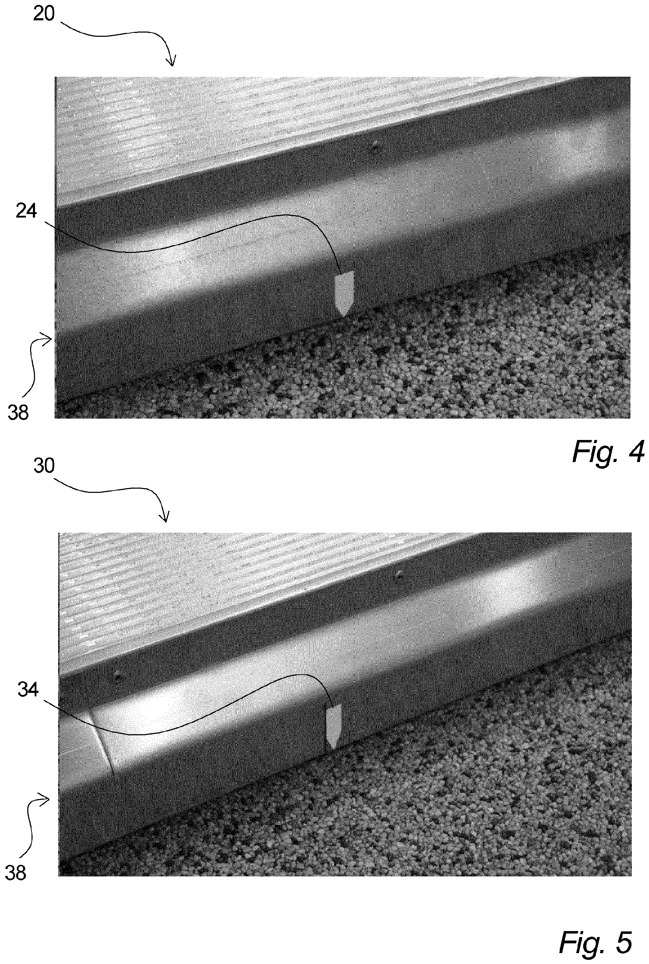

Fig. 4 shows an example of a degree marking device 24 on a right-side platform 20, and similarly, Fig. 5 shows an example of a degree marking device 34 on a left-side platform 30, wherein the degree marking device 24, respectively 34, may be a permanently mounted indicator or arrow.

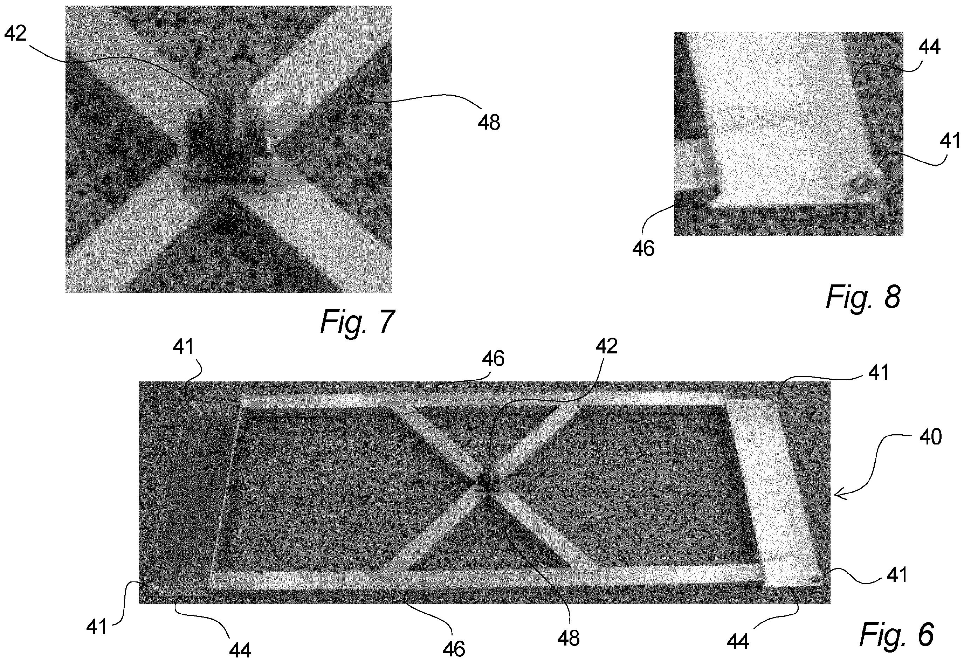

Fig. 6 shows a connecting device 40 according to an embodiment of the invention, the underside here being shown viewed at an angle from above. The connecting device 40 is designed with a centre axle 42 and guide pins 41. In the example shown, the connecting device 40 is designed with two cross members 46 connected to two end plates 44 as shown, and wherein a centre part 48 is disposed between the two cross members 46, which may e.g. be X-shaped as shown, and which carries the centre axle 42. The two end plates 44 in this example are each provided with two guide pins 41, one in each corner, as shown. It should be understood that the centre axle 42 and the guide pins 41, when the connecting device 40 is used, will protrude downwards, and that the centre axle 42 will be insertable into the centre hole 14 in the flange 10, and that the guide pins 41 will match to be insertable into selected holes of the holes 21, 22, respectively 31, 32, in the right-side and the left-side platform. Figs. 7 and 8 show detail parts of Fig. 6, Fig. 7 showing the centre axle 42 mounted on the centre part 48, and Fig. 8 showing that a guide pin 41 is mounted at a corner of an end plate 44.

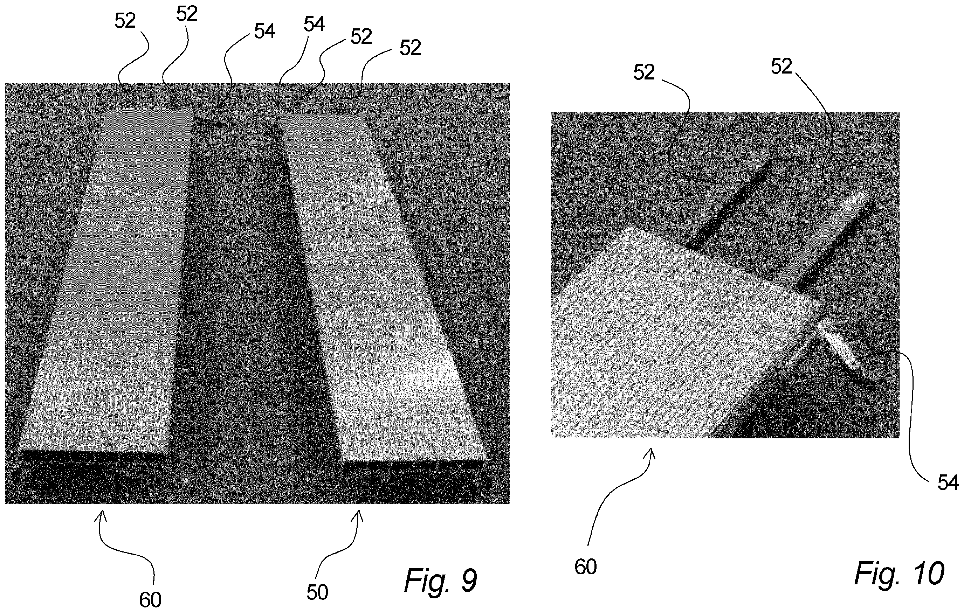

Fig. 9 shows a right-side extension platform 50 and a left-side extension platform 60, viewed at an angle from above and from one end. Both of these extension platforms are provided with extension guide pins 52 and a snap locking device 54 as well as supporting element 28 (not shown in Fig. 9). Each of these extension platforms 50 and 60 may consist of an aluminium ramp/platform with e.g. a length of 1.7 metres and a width of 30 cm. On the outer side of each of these extension platforms, a shielding 38 is mounted (not shown in Fig. 9), and also on the right-side platform 20 and the left-side platform 39, which shielding covers the supporting element 28.

Fig. 10 shows a detail part of Fig. 9, wherein is shown the end of the left-side extension platform 60, on which is mounted two extension guide pins 52, each of e.g. 20 cm, used for coupling to the left-side platform 30. The same will apply to the right-side extension platform 50, which, via corresponding extension guide pins 52, can be coupled to the right-side platform 20. Further, a locking arrangement is mounted on the left-side extension platform 60, e.g. in the form of a snap locking device 54, which is used for locking to the left-side platform 30. The same will apply to the right-side extension platform 50, which, via a corresponding locking arrangement in the form of e.g. a snap locking device 54, can be locked to the right-side platform 20.

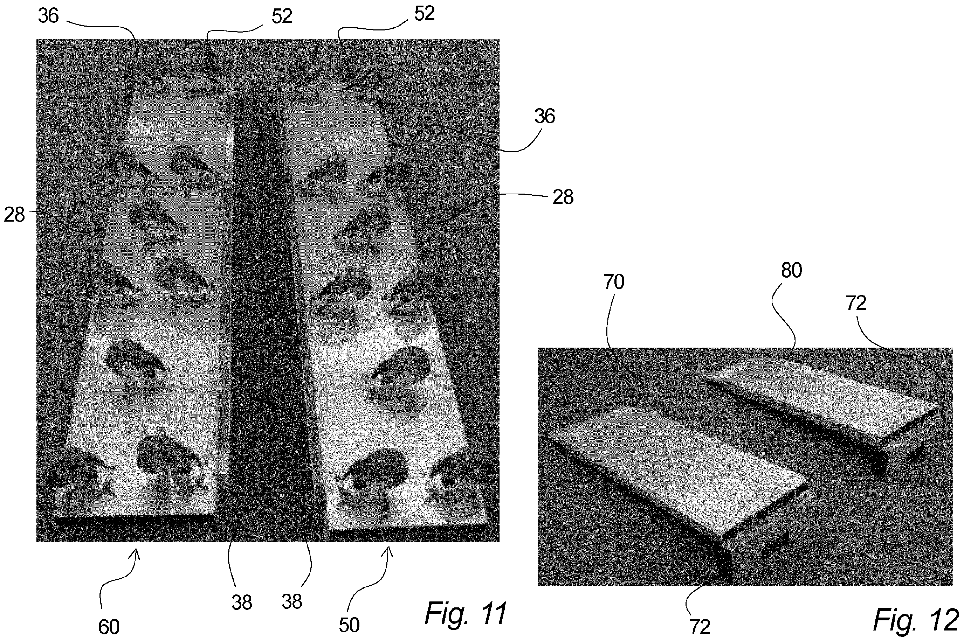

Fig. 11 shows the undersides of the right-side extension platform 50 and the left-side extension platform 60, where it is also shown that each of these is provided on the outer side with a shielding 38, which covers the supporting element 28. As shown, the supporting element 28 may e.g. consist of ten castor wheels 36, configured to be turnable and thus movable in any direction. These wheels may e.g. each carry 500 kg. These wheels are riveted to the underside of the respective extension platforms 50, 60 and are disposed in a distributed manner, such as shown in Fig. 11, along the width and length of the platform, whereby the two extension platforms are supported by the wheels evenly distributed along the longitudinal and width directions.

Fig. 12 shows an example of a right-side drive ramp 70 and a left-side drive ramp 80, viewed partially from the side and at an angle from above. Both of these are designed as drive ramps with a rest support device 72 at one end, e.g. a carrier element as shown, which on the one hand raises one end of the drive ramp, but which also has an edge that is pushed under the platform, whether it is an ordinary platform 20 or 30 or an extension platform 50 or 60, so that it will be stable when driving a vehicle up the ramp and further along the platform(s).

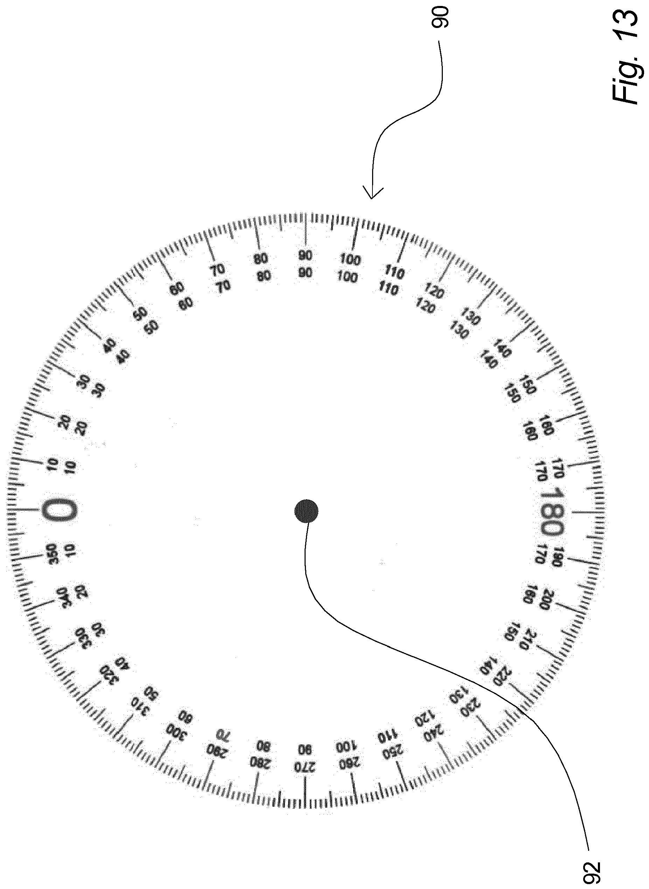

Fig. 13 shows an example of a protractor 90 for use in setting/display of degree interval on the floor. This protractor 90 may e.g. be a paper template, for instance in A1 size, which is placed on the floor under the flange 10 during fixing thereof. A string may then e.g. be drawn from the centre of the ball bearing 12 (centre 92 of the protractor 90) through the desired degrees where photos are to be taken, and a marking can be set on the floor. The(se) marking(s) set on the floor can subsequently be used, e.g. with the degree marking devices 24 or 34 on the right-side platform 20, respectively the left-side platform 30, to rotate the turning device to the desired position(s) where photos are to be taken. For example, 12 markings can be set at 30° intervals, corresponding to 12 photos, 24 markings at 15° intervals, corresponding to 24 photos, 36 markings at 10° intervals, corresponding to 36 photos, or 48 markings at 7.5° intervals, corresponding to 48 photos.

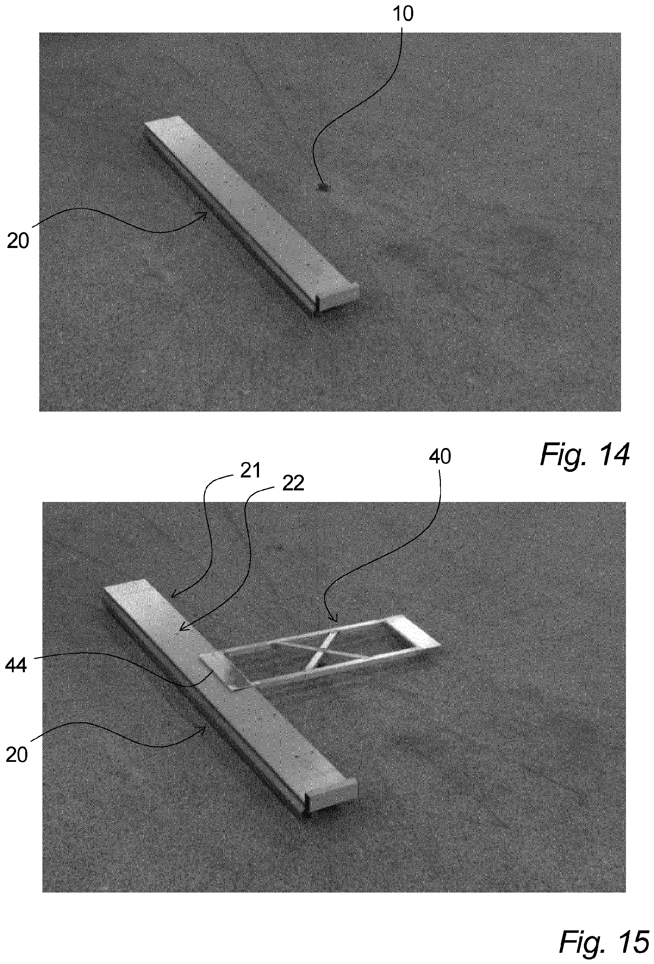

Figs. 14-22 illustrate the assembly and use of an exemplary turning device according to an embodiment of the invention, as will be described in the following.

Fig. 14 shows a right-side platform 20 placed on the floor at an appropriate distance to the flange 10 with the ball bearing, which is fixed in or to the floor. Fig. 15 illustrates that a connecting device 40 is located so that its centre axle (42; Figs. 6 and 7) is placed in the flange 10 with the ball bearing and so that its guide pins (41; Figs. 6 and 8) on one end plate 44 are introduced into appropriate holes of the holes 21, 22 in the right-side platform 20. As illustrated in Fig. 2, there may be e.g. two rows of holes along the platform along its length, and as shown in Fig. 15, holes may be chosen so that the connecting device 40 is located around the middle and at a distance between platform and flange 10 corresponding to a relatively small track width of a vehicle or trailer. It should be noted that during work on the sub-elements of the turning device, sub-elements with supporting element 28 may be immediately movable on the floor, due e.g. to the castor wheel design that can be moved in any direction, and due to the fact that the right-side 20 and the left-side platform 30 as well as the respective extension platforms 50, 60 are supported on the floor via the respective supporting elements and constitute independent units that can easily be handled in connection with assembly and disassembly.

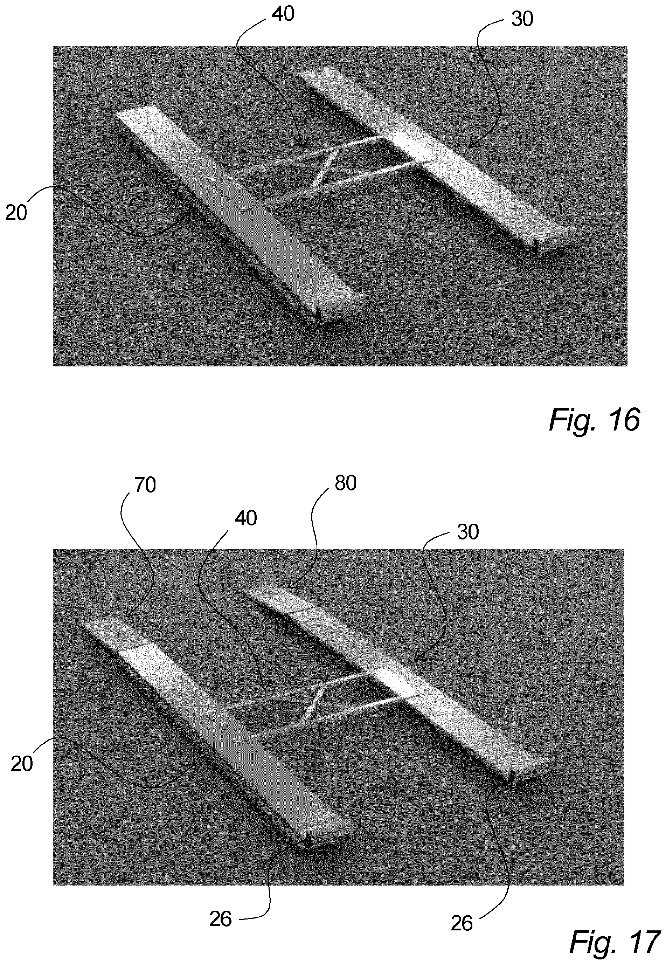

Fig. 16 shows that a left-side platform 30 is located at the other end of the connecting device 40, and the left-side platform 30 is, in the same way as the right-side platform 20, coupled to the connecting device 40. As shown in Fig. 17, a right-side 70 and a left-side drive ramp 80 can then be placed at the respective ends of the right-side platform 20 and the left-side platform 30, i.e. the ends opposite the end parts 26. A vehicle or a trailer (not shown) can then be driven up on the turning device, and the two drive ramps can be removed. The turning device with the coupled parts as well as vehicle or trailer can now be rotated around the flange 10, manually or driven by machine/electrically. As previously mentioned, the length of the right-side platform 20 and the left-side platform 30 may be 3 metres (and the width 30 cm), and the connecting device 40 can be sized so that the width of the turning device is 1.80 metres, so that the turning device is appropriate for ordinary vehicles and trailers.

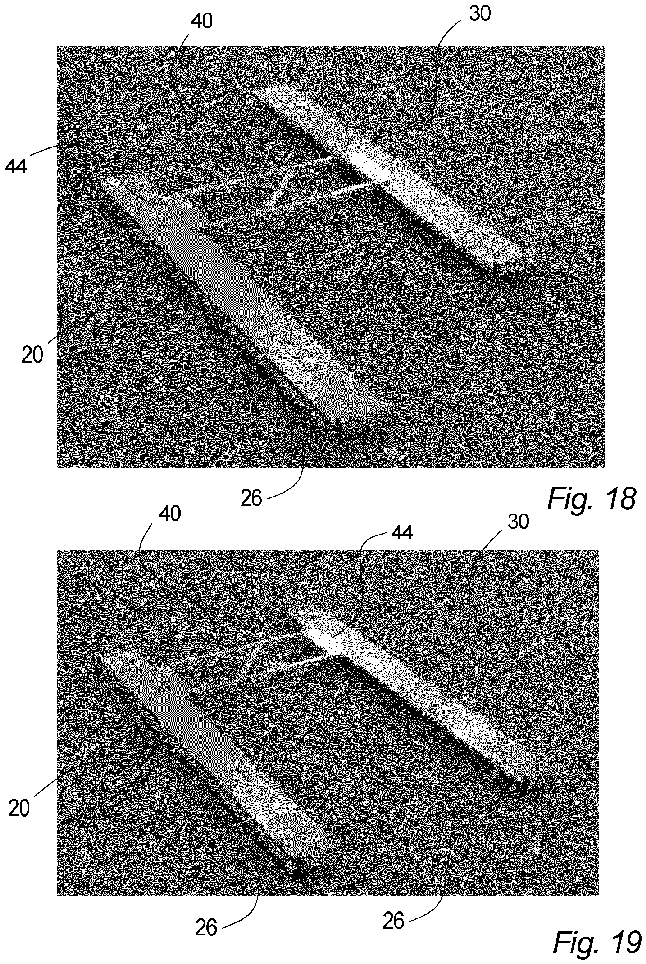

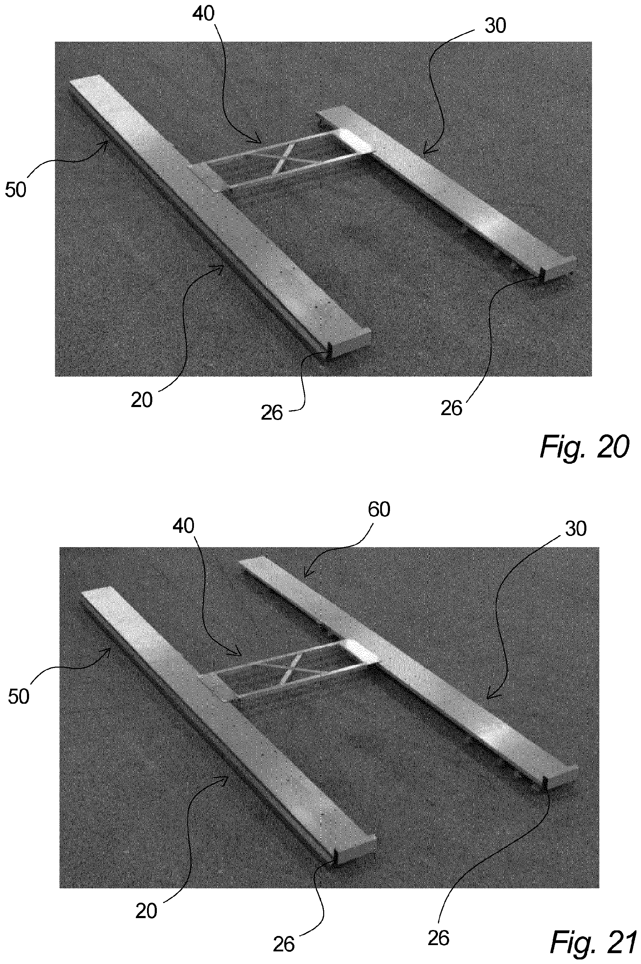

The turning device can be reset for large vehicles and/or trailers, such as shown in Figs. 18-22 (or can be assembled from the start for this purpose). As shown in Fig. 18, the connection point between the connecting device 40 and the right-side platform 20 is moved by e.g. one end of the connecting device 40 being lifted up, the right-side platform 20 being moved forward and the guide pins of the connection point being inserted into other appropriate holes 21, 22 on the right-side platform 20. As shown in Fig. 19, corresponding action may be taken in relation to the left-side platform 30. Then, as shown in Figs. 20 and 21, a right-side extension platform 50 and a left-side extension platform 60 can be connected, which in both cases takes place by introducing the extension guide pins 52 on the extension platforms into the respective 'main platforms' 20 and 30, after which the parts are locked together with e.g. the snap locking devices 54. It should be noted that the handling of the extension platforms 50 and 60 is simple, since they are both 'run' to the ends of the respective 'main platforms' 20 and 30, the supporting elements 28, e.g. comprising castor wheels 36, ensuring easy handling, and since extension platforms and 'main platforms' are further located at the same height, making them easy to couple together.

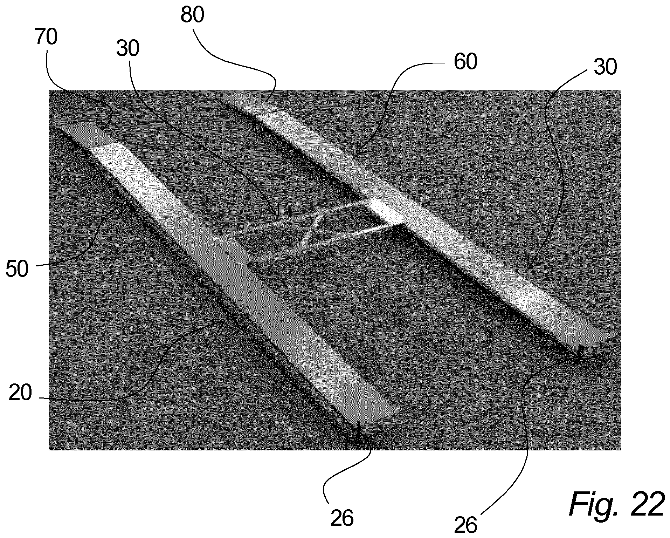

As shown in Fig. 22, a right-side 70 and a left-side drive ramp 80 may then be placed at the respective ends of the right-side extension platform 50 and the left-side extension platform 60, opposite the end parts 26. A vehicle or a trailer (not shown) can then be driven up on the turning device, and the two drive ramps can be removed. The turning device with the coupled parts as well as vehicle or trailer can now be rotated around the flange 10, manually or driven by machine/electrically. As previously mentioned, the length of the right-side platform 20 and the left-side platform 30 may be 3 metres (and the width 30 cm), and the length of the extension platforms may be 1.70 metres (also with the width 30 cm) so that an overall platform length of 4.70 metres is achieved. The connecting device 40 may be sized so that the width of the turning device can be up to 2.00 metres, so that in total, the turning device in this configuration is appropriate for large vehicles and trailers.

In connection with the use of the turning device as explained above, the operation can be manual, i.e. the turning device is turned manually and stopped at the desired degree markings, the degree marking device 24 or 34 in the form of indicator, arrow, laser light or the like being aligned with respective markings on the floor. However, the operation may also be by machine and more or less automated, as the turning device may be turned or driven by an electric motor, e.g. by means of a remote control and/or a pedal function. Said electric motor may be linked directly to a turning wheel that drives the turning device round, or the electric motor may be connected via gears, drive belt or drive shaft as force-transmitting element(s) to e.g. a wheel that may drive the turning device round. For instance, this may be a drive unit which includes the electric motor and which can be placed/mounted on one of the platforms. Since such machine operation may take place e.g. through remote control, there is also a possibility of a greater or lesser degree of automation, as the electric motor may e.g. be controlled in such a way that it turns the turning device by a certain angle, after which it stops at a photo position, following which another angular interval is turned, etc. Other designs of the drive system, its operation and control are possible.

With reference to Figs. 23-27, further embodiments of the invention will be described, wherein generally the same elements as previously described will be referred to using the same reference numerals.

As shown in Fig. 23, which illustrates a turning device according to an embodiment of the invention, viewed from above, as previously mentioned, a right-side platform 20, a left-side platform 30, a right-side extension platform 50 and a left-side extension platform 60 are used, wherein the two sides of the turning device are connected by a connecting device 40. The platforms are generally designed as aluminium platforms, just as the connecting device 40 may be designed in aluminium. As with the respective platforms described above and shown in Figs. 1-22, the platforms 20, 30, 50 and 60 are each embodied with a supporting element 28 on their underside (not shown in Fig. 23), e.g. comprising a number of castor wheels configured to be turnable and thus moveable in any direction. These wheels may e.g. each carry 500 kg. The wheels are e.g. riveted to the underside of the respective platforms and are disposed in a distributed manner (e.g. as shown in the previous figures) along the width and length of the platforms, whereby the platforms are supported by the wheels evenly distributed along the longitudinal and width directions. The weight of a vehicle will thus also be evenly distributed on the platforms. The respective platforms 20, 30, 50 and 60 can thus also be moved individually when they are not coupled together, which facilitates handling.

Furthermore, the platforms 20, 30, 50 and 60 may be designed with end parts, shielding on one side etc., and otherwise as described above.

For use in coupling with the connecting device 40, the right-side platform 20, the left-side platform 30, the right-side extension platform 50 and the left-side extension platform 60 in this design are also provided with holes 23, 33 in the longitudinal direction, wherein these holes 23, 33 are designed as horizontal holes, e.g. as shown in that guide bushings 82 are provided along the sides of the respective platforms.

Said guide bushings 82, which may be tubular elements, e.g. round shape or square, may optionally extend over a substantial part of the width of each platform and under the same. As shown, a piece may protrude toward the middle of the turning device, which may facilitate assembly etc., since a locking grip 84 may be provided at this point, as illustrated. These locking grips 84, which may be screw grips and are manually operated, are used to retain e.g. the connecting device 40, so that, after adjustment, a desired width of the turning device is achieved.

As further shown in Fig. 23, e.g. at the end of the two extension platforms 50 and 60, a separate cross member 49 may be placed, which is led through two of the guide bushings and retained by the locking grips 84, so that the turning device achieves greater rigidity and stability. Likewise, as shown, separate cross members 49 may be mounted also to the other guide bushings 82 to connect the left and right sides of the platforms 20, 30 and the extension platforms 50, 60.

It is further shown that the turning device may be provided with a drive unit 100, which may be mounted on the left platform 30 (as shown) or on the right platform 20, preferably in the area between the two platforms. An example of such a drive unit with which the turning device can be rotated in one or both directions around the flange 10, will be mentioned later. The drive unit 100 may, as outlined, be designed with one or more guide bushings 82 horizontally oriented, so that the drive unit may be coupled to e.g. the left-side platform 30 using a separate cross member which is led to one of the guide bushings 82 of the platform. Optionally, such a separate cross member 49 for retaining the drive unit 100 may extend from one platform to the other, such as shown at the top of Fig. 23. It is also indicated by broken lines here that the separate cross member 49 may extend under the platforms 20 and 30 through a substantial part of their width. Optionally, the separate cross member 49 may also extend on the other side of the platforms, which may also be the case with other locations of a separate cross member 49.

As is also shown in Fig. 23, the connecting device 40 is located centrally for the turning device and in such a way that it is coupled to the guide bushings 82 on all four platforms 20, 30, 50 and 60. The connecting device 40 thus serves not only to maintain a distance between the right and left side, but also to attach the right-side platform 20 to the right-side extension platform 50, as well as to attach the left-side platform 30 to the left-side extension platform 60. However, it should be understood that there may be additional locking means to hold the extension platforms onto the 'main' platforms.

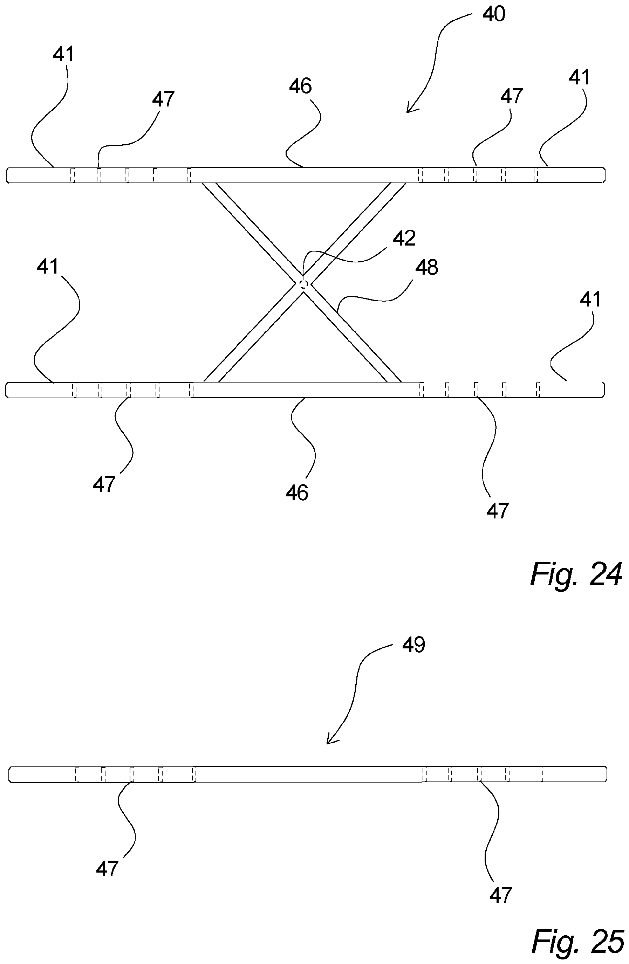

Fig. 24 shows, viewed from above, an embodiment of the connecting device 40 for use at the turning device as shown in Fig. 23. This connecting device 40 is substantially designed as described in connection with Fig. 6, i.e. with a centre part 48, e.g. X-shaped, which carries in the middle the indicated centre axle 42, and which connects the two cross members 46. In this embodiment, in continuation of each cross member 46 a guide pin 41 is disposed, which as described is designed to be introduced into a horizontal hole 23, 33 on the guide bushing 82 of a platform. As mentioned, the distance between the platforms may thus be adjusted, and as mentioned, the guide pins 41 may be locked in the guide bushings by means of the locking grips 84, which may be designed as screw clamps or the like. For the purposes of this locking, the guide pins 41 may be designed with recesses, through-bores or the like, constituting locking holes 47. These may, as illustrated in Fig. 24 be placed with predetermined intervals, at predetermined positions or the like, so that the width of the turning device can be adjusted in appropriate steps. It should be understood, however, that a stepless adjustment may also be used, e.g. if the locking grips 84 can squeeze against the guide pins 41.

Fig. 25 shows a separate cross member 49 such as used at the turning device shown in Fig. 23. As can be seen, this separate cross member 49 corresponds to the cross member 46 of the connecting device with extensions in the form of guide pins, and locking holes 47 are thus also provided on the separate cross member 49, located at predetermined intervals, at predetermined positions or the like, so that the separate cross member can be coupled and locked to the respective guide bushings 82 in steps (or possibly steplessly), corresponding to the set width.

The separate cross members 49 and the guide pins 41 are designed so that they correspond in form to the holes 23, 33 in the guide bushings 82, e.g. square or circular in cross-section.

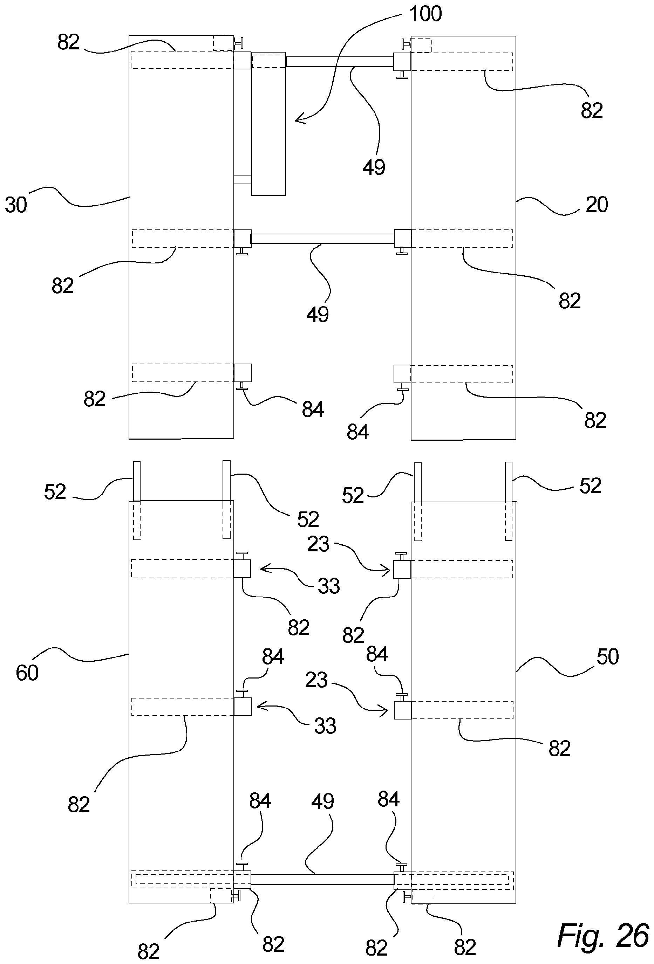

Fig. 26 shows a turning device substantially similar to that shown in Fig. 23, but wherein it is shown that the right-side extension platform 50 and the left-side extension platform 60 are separated from the two platforms 20 and 30, and wherein, for the sake of clarity, the connecting device 40 as well as one of the cross members 49 are removed (which takes place by pushing the two sides of the platforms from each other after all the locking grips 84 have been loosened). As can be seen, the extension platforms 50 and 60 are provided with extension guide pins 52 (as also described in connection with Figs. 9 and 10) to establish connection with the respective 'main platforms' 20 and 30. A lock may thus also be designed which keeps extension platform and 'main platform' together, e.g. using the guide bushings 82 with locking grip 84, which at each end of each platform 20, 30 may grip onto the extension guide pins 52, or a snap locking device 54 may be used (see Fig. 10).

Fig. 26 further shows that the guide bushings 82, which may be designed from square tubes, round tubes or the like, may be placed under the respective platforms and in such a way that they are extended under the platforms substantially along the width of the platforms. It should be noted that e.g. separate cross members 49, optionally in shorter form, may be mounted in the guide bushings 82 and protrude on the outer side of the platforms, e.g. in support of additional elements, cover plates and the like. It is furthermore shown that, for the same purpose at the ends of the platforms (as shown at the bottom of Fig. 26), guide bushings 82 may run in the longitudinal direction.

It should be noted that, also in connection with the turning device as shown in Figs. 23 and 26, drive ramps 70 and 80 may be used, as explained in connection with Figs. 12, 17 and 22, and the turning device may be used in substantially the same manner.

The platforms used may be designed in different appropriate sizes, but as an example it may be mentioned that 'main' platforms as well as extension platforms may have a length of 2-3 m each, e.g. 2.35 m, and that the widths may be in the range of 0.3 m to 0.8 m, 0.5 m to 0.8 m or in the range of 0.6 m to 0.7 m. It is clear that other dimensions are possible.

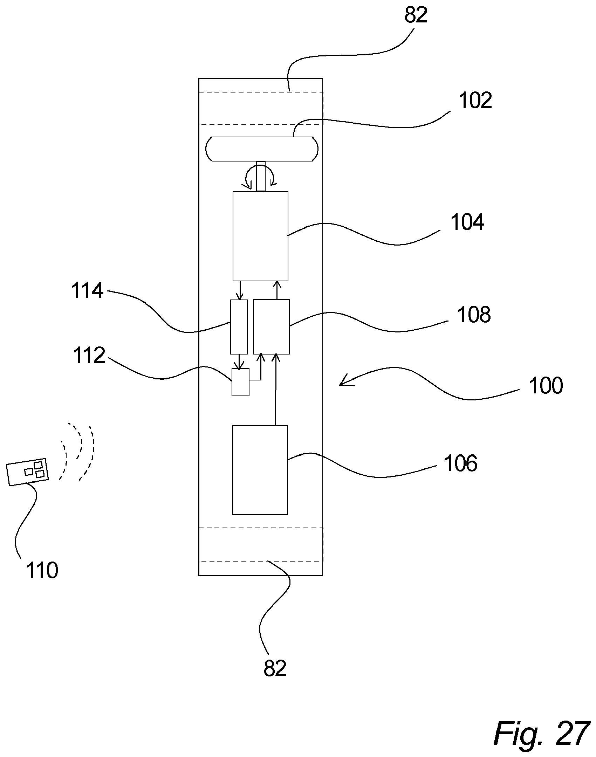

Fig. 27 outlines an embodiment of a drive unit 100, wherein the actual unit has a guide bushing 82 at each end, with which the unit, via two separate cross members 49 or in a different manner, may be mounted on the side of a platform. The drive unit 10 has a drive wheel, drive roller or the like 102, which can move the end of the turning device in one or both directions, so that the turning device is turned around the fixed centre of rotation on the floor. This movement may take place using an electric motor 104, which is supplied with energy from a voltage supply 106, e.g. a battery, via a control unit 108, which e.g. controls the direction of turning, travel or angular turning of the turning device etc., as will be well known to a person skilled in the art. In this connection, the drive unit 100 may be provided with a distance and/or degree measuring device 114, which, e.g. by measuring revolutions on the electric motor, may calculate distance and/or angular turning of the turning device. The unit may further comprise a receiver/transmitter 112, so that the drive unit 100 may be controlled using a remote control 110. The drive unit may thus be configured, when activated via the remote control, to turn a set angle, after which it stops on it own etc. Other ways of automating the operation may be exercised.

Known 360-degree turning devices of this kind, for use in degree-separated photography of vehicles/trailers, are larger and considerably heavier stationary installations, which for most vehicle and trailer dealers is a very expensive solution, for some even an economically impossible solution. At the same time, the known solutions are extremely time-consuming to assemble and disassemble again.

What is particular about this invention is that it can easily be set in degrees so that the user can easily set the device to turn exactly the desired number of degrees (as opposed to other devices where degree settings exist only on stationary power-driven platforms) - that it can easily and without the use of tools and measuring equipment be set so that it can be used for vehicles and trailers of up to 5 tonnes of empty weight with different wheel bases and track widths (as opposed to other devices which can only be either adjusted on wheel base or track width). The castor wheels used make it possible to adjust the wheel base and track width smoothly (as opposed to devices with attached rollers and fixed wheels).

The advantages of this invention is that it is easy to assemble/disassemble so that a single person can do this alone. It is easily adjustable relative to wheel base and track width, it is mobile and may thus easily be packed away so that it does not take up unnecessary space (as opposed to the known stationary versions). It is made of aluminium, which makes it light and easily manageable.

The purpose of this invention is to be able to photograph a vehicle or trailer while it rotates on the turning device, in a self-determined degree interval (e.g. 15 degrees = 24 photos). These photos are subsequently used in a photo editing programme, which is able to create a 360° digital display to potential customers, who thus have the opportunity of turning and zooming in and out themselves on the vehicle/trailer and thereby achieving a more LIVE display.

Described above are various specific embodiments with reference to the drawings, but it must be clear that these embodiments as well as the various elements described can be combined in countless ways within the scope of the claims.

### List of reference designations

- 10: Flange with ball bearing
- 12: Ball bearing
- 14: Centre hole
- 16: Mounting hole in flange
- 20: Right-side platform
- 21, 22: Holes in right-side platform for connecting device
- 23: Horizontal holes in right-side platform for connecting device
- 24: Degree marking device on right-side platform
- 26: End part on platform
- 28: Supporting element
- 30: Left-side platform
- 31, 32: Holes in left-side platform for connecting device
- 33: Horizontal holes in left-side platform for connecting device
- 34: Degree marking device on left-side platform
- 35: Rubber block
- 36: Castor wheel
- 38: Shielding
- 40: Connecting device
- 41: Guide pin
- 42: Centre axle
- 44: End plate
- 46: Cross member
- 47: Locking hole in cross member/guide pin
- 48: Centre part
- 49: Separate cross member
- 50: Right-side extension platform
- 52: Extension guide pin on extension platform
- 54: Snap locking device
- 60: Left-side extension platform
- 70: Right-side drive ramp
- 72: Rest support device
- 80: Left-side drive ramp
- 82: Guide bushing
- 84: Locking grip
- 90: Protractor
- 92: Centre of protractor
- 100: Drive unit
- 102: Drive wheel, drive roller or the like
- 104: Electric motor
- 106: Voltage supply, e.g. a battery
- 108: Control unit
- 110: Remote control
- 112: Receiver/transmitter
- 114: Distance and/or degree measuring device

## Claims

1. A turning device for horizontal 360-degree rotation of vehicles and trailers, the turning device comprising
- a right-side platform (20) and a left-side platform (30), each with a supporting element (28),
- a connecting device (40),
- a centre device for attachment to a floor, and
- a right-side drive ramp (70) and a left-side drive ramp (80),
wherein the connecting device (40) is arranged to connect the right-side platform (20) and the left-side platform (30), wherein the right-side platform (20) and the left-side platform (30) each has a plurality of holes (21, 22;31, 21; 23, 33) for adjusting the turning device, and wherein the connecting device (40) is rotatable around said centre device,
the turning device being c**haracterised in** that
- the connecting device (40) has a centre axle (42) that can be placed in said centre device, that
- the connecting device (40) has guide pins (41) for establishing connection to the right-side platform (20) and the left-side platform (30) via respective holes of said plurality of holes (21, 22; 31, 32; 23, 33), that
- the turning device comprises a device for indicating the turning position of the turning device, that
- the turning device (40) comprises a right-side extension platform (50) and a left-side extension platform (60), designed to extend the right-side platform (20) and the left-side platform (30), respectively, wherein each of the right-side extension platform (50) and the left-side extension platform (60) has extension guide pins (52) at an end for cooperation with the right-side platform (20) and the left-side platform (30), respectively, and that
- each of the right-side extension platform (50) and the left-side extension platform (60) has a supporting element.

2. The turning device according to claim 1, wherein said supporting element (28) for the right-side platform (20), the left-side platform (30), the right-side extension platform (50) and the left-side extension platform (60) comprises units selected from the group comprising:
castor wheels (36),
steel rollers,
ball bearings,
roller bearings, and
swivel wheels with motor.

3. The turning device according to claim 1 or 2, wherein the centre device for attachment to a floor comprises a flange (10) with ball bearing (12), and wherein the centre axle (42) of the connecting device (40) can be placed in the ball bearing (12).

4. The turning device according to claim 1, 2 or 3, wherein said supporting element (28) for the right-side platform (20), the left-side platform (30), the right-side extension platform (50) and the left-side extension platform (60) comprises a number of units disposed under the respective platforms, distributed along the longitudinal and width direction of the respective platforms.

5. The turning device according to claim 4, wherein said supporting element (28) for each platform comprises a plurality of units, e.g. 10 or more wheels, castor wheels (36) or similar wheels.

6. The turning device according to any of claims 1-5, wherein the device for indicating the turning position of the turning device comprises a degree marking device (24, 34) in the form of a fixedly mounted indicator or arrow on the right-side platform (20) and/or the left-side platform (30).

7. The turning device according to any of claims 1-6, wherein the device for indicating the turning position of the turning device comprises laser light pointing downwards on degree markings on a floor.

8. The turning device according to any of claims 1-7, wherein the device for indicating the turning position of the turning device comprises a distance and/or degree measuring device (114) located on the turning device to provide a measure of distance and/or angle rotation during rotation of the turning device.

9. The turning device according to any of claims 1-8, wherein the turning device is embodied using aluminium for the design of platforms (20, 30, 50, 60), drive ramps (70, 80), connecting device (40) and/or other elements.

10. The turning device according to any of claims 1-9, wherein the turning device is adapted for machine operation and handling, driven by an electric motor (104), e.g. by means of a remote control (110) and/or a pedal function, and wherein said electric motor (104) is in communication with a drive wheel (102), e.g. via gears, a drive belt or a drive shaft for turning the turning device.

11. The turning device according to any of claims 1-10, wherein the right-side extension platform (50) and the left-side extension platform (60) each have a locking device, such as a snap locking device (54), for locking to the right-side platform (20) and the left-side platform (30), respectively.
